# EUROPÄISCHE PATENTANMELDUNG

(11) **EP 0 816 006 A1**
(43) Veröffentlichungstag der Anmeldung: **07.01.1998**
(21) Anmeldenummer: 97104478.9
(22) Anmeldetag: 15.03.1997
(51) Int. Cl.: B23K 13/00, B29C 65/04

(54) **Hochfrequenz-Schweisselektrode**

(30) Priorität: 27.06.1996 DE 29611207 U
(71) Anmelder: GOTTLIEB BINDER GMBH & Co., 71088 Holzgerlingen (DE)
(72) Erfinder: Zölss, Werner, 71088 Holzgerlingen (DE)
(74) Vertreter: Patentanwälte Bartels und Partner

(57) **Zusammenfassung**

Eine Hochfrequenz-Schweißelektrode (9) besteht aus zumindest einem textilen Flachmaterial (13) mit einer Vielzahl darin verankerter, elektrisch leitfähiger Stifte (11), die von der Oberfläche des Flachmaterials (13) in Richtung auf die zu verschweißenden Gegenstände (17, 19) hervorstehen.

## Beschreibung

Die Erfindung betrifft eine Hochfrequenz-Schweißelektrode.

Das Hochfrequenzschweißen, bei dem die Eigenschaften polarer Kunststoffe ausgenutzt werden, sich im hochfrequenten Wechselfeld eines Kondensators zu erwärmen, ist im Stand der Technik bekannt. Die hierfür verwendeten Elektroden bestehen üblicherweise aus einem Flachmaterial aus Kupfer, Kupferlegierungen oder Messing.

Es ist auch bekannt, das Hochfrequenzschweißen für das Verschweißen von Haftverschlüssen zu verwenden. Dabei besteht die Besonderheit, daß die aus dem Flachmaterial hergestellten Elektroden als solches nicht verwendet werden können, da sie die Struktur der Haftverschlußoberfläche zerstören würden. Für diesen Einsatzzweck wurden die Elektroden so abgewandelt, daß aus dem jeweiligen Flachmaterial eine Vielzahl von elektrisch leitfähigen Stiften hervorstehen, die zwischen die Schlingen oder Haken einer Haftverschlußoberfläche eindringen können, ohne diese zu deformieren. Die Herstellung solcherart abgewandelter Elektroden ist sehr kostenintensiv, da die Stifte aus dem vollen Material gefräst oder in entsprechende Bohrungen in dem aus Metallplatten bestehenden Elektrodenflachmaterial eingesetzt werden.

Ausgehend von diesem Stand der Technik liegt der Erfindung die Aufgabe zugrunde, eine Hochfrequenz-Schweißelektrode zur Verfügung zu stellen, die sehr viel kostengünstiger herstellbar ist.

Gelöst wird diese Aufgabe durch die Merkmale des Anspruchs 1.
Das erfindungsgemäße textile Flachmaterial mit den darin verankerten Stiften ist in der Textilindustrie in völlig anderer Verwendungsweise als sogenanntes Kratzenband bekannt. Ein solches Kratzenband setzt sich vorwiegend aus mehreren Lagen eines Baumwollstoffes zusammen, auf denen je nach Verwendungszweck verschiedene Schichten Wollfilz oder Kautschuk oder synthetische Stoffe aufgeleimt werden. Solche Kratzenbänder sind die eigentlichen Arbeitsorgane von sogenannten Krempelmaschinen. Dabei haben die auf dem textilen Flachmaterial solcher Kratzenbänder hervorstehenden Stifte allerdings in der Regel eine Häkchenform, um der Aufgabe gerecht zu werden, das auf der Krempelmaschine verarbeitete Fasergut auseinanderzuziehen und zu parallelisieren. Die Häkchenform der Stifte, die dort Kratzenzähne genannt werden, wird in der Regel dadurch erreicht, daß die Spitzen dieser Kratzenzähne mit einer Neigung in Arbeitsrichtung aus dem Kratzenband hervorstehen. Die Neigung der Spitzen wird mittels eines Knicks oder Bogens bewirkt, der erst oberhalb des Kratzenbandes beginnt. Der untere Teil der Kratzenzähne, der im Kratzenband verankert ist und unmittelbar aus diesem herausragt, weist diesen Knick oder Bogen noch nicht auf und kann sogar entgegengesetzt geneigt sein.

Überraschenderweise läßt sich ein solches Kratzenband in etwas abgewandelter Form im Bereich des Hochfrequenzschweißens als Schweißelektrode einsetzen, wodurch in überaus vorteilhafter Weise das Fräsen der Stifte aus dem vollen Metallflachmaterial oder das Einsetzen der Stifte in entsprechende Bohrungen des Flachmaterials vermieden werden kann. Da die Elektroden selbst während des Hochfrequenz-Schweißens kalt bleiben, bildet die Verwendung von textilem Material als Elektrodenbasis keine Gefahrenquelle.

In einer bevorzugten Ausführungsform lassen sich solche erfindungsgemäßen Schweißelektroden dadurch herstellen, daß die leitfähigen Stile eine U-förmige Ausbildung aufweisen, wobei die offenen Enden der U-Form jeweils die von der Oberfläche des Flachmaterials hervorstehenden Stifte bilden, und wobei das entgegengesetzte geschlossene Ende der U-Form den Verankerungsteil in dem Flachmaterial bildet. Die Verankerung geschieht dergestalt, daß sich das geschlossene Ende auf der von den zu verschweißenden Gegenständen abgewandten Oberfläche des Flachmaterials befindet.

Vorzugsweise besteht das textile Flachmaterial aus natürlichem und/oder synthetischem textilem Material. Vorzugsweise ist das Flachmaterial ein Stoffverbund aus Baumwolle und Kunstfaser. Als Kunstfaser kann dabei eine hochtemperaturbeständige Kunstfaser, besonders bevorzugt hochtemperaturbeständiges Polyamid verwendet werden. Dem Fachmann stehen aber noch eine Reihe weiterer Kunstfasern zur Verfügung, die anstelle des Polyamids Verwendung finden können.

Die Verwendung einer solchen erfindungsgemäßen Hochfrequenz-Schweißelektrode ist dann sinnvoll, wenn der eine der zu verschweißenden Gegenstände ein Haftverschluß und der andere der zu verschweißenden Gegenstände eine Folie, vorzugsweise eine Kunststoffolie ist.

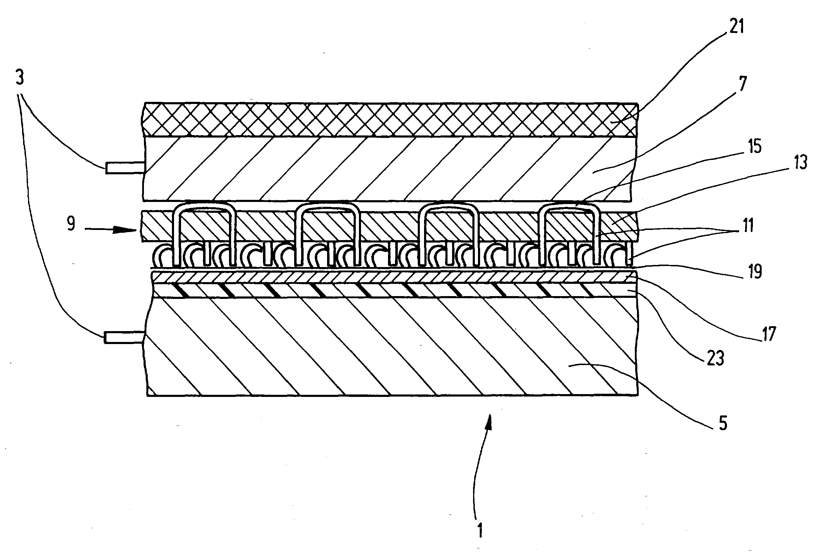

Im folgenden soll die Erfindung anhand eines Ausführungsbeispiels näher erläutert werden. Dabei zeigt die einzige Figur der Zeichnung einen Schnitt durch eine unvollständig dargestellte Hochfrequenz-Schweißvorrichtung.

In der einzigen Figur der Zeichnung ist ausschnittweise eine Vorrichtung 1 zum Hochfrequenzschweißen mit Anschlüssen 3 zur Erzeugung des hochfrequenten Wechselfeldes dargestellt. Zwischen einer Schweißunterplatte 5 aus Aluminium und einer Elektrodenhalterung 7 in Form von ebenfalls einer Aluminiumplatte befindet sich die erfindungsgemäße Hochfrequenz-Schweißelektrode 9. Diese weist elektrisch leitfähige Stifte 11 auf, welche in einem textilen Flachmaterial 13 eingebettet sind. Das textile Flachmaterial 13 besteht aus einem mehrschichtigen Stoffverbund aus Baumwolle und hochtemperaturbeständigem Polyamid, im Handel erhältlich unter der Bezeichnung "Nomex". Für dieses textile Trägermaterial der Schweißelektrode 9 wurde hier die an sich im Bereich der üblichen metallischen Trägermaterialien der Hochfrequenz-Schweißelektrode 9 übliche Bezeichnung als Flachmaterial 13 beibehalten.

Die elektrisch leitfähigen Stifte 11 haben einen Durchmesser von in etwa 0,35mm. Sie sind U-förmig ausgebildet, wobei jeweils die offenen Enden der U-Form die Stifte 11 bilden, die aus dem textilen Flachmaterial in Richtung auf die Schweißunterplatte 5 herausragen. Das entgegengesetzte geschlossene Ende jeder U-Form bildet den Verankerungsteil 15 der Stifte 11 in dem Flachmaterial 13 dadurch, daß es sich jeweils auf der Oberfläche des Flachmaterials 13 befindet, die der als Elektrodenhalterung 7 dienenden Aluminiumplatte zugewandt ist. Im Gegensatz zu dem im Textilbereich bekannten Kratzenband werden die Stifte gerade ausgebildet und stehen im wesentlichen rechtwinklig mit einer Länge von in etwa 1,8 bis 2mm aus dem Flachmaterial 13 hervor. Die die Stifte 11 bildenden U-Formen sind in definierten Abständen auf dem textilen Flachmaterial 13 so verteilt, daß eine sehr dichte Anordnung entsteht. Dabei verleiht der Stoffverbund des textilen Flachmaterials 13 den die Stifte 11 bildenden U-Formen einen guten Halt, ohne die Beweglichkeit der Stifte 11 ganz einzuschränken. Zur besseren elektrischen Kontaktfähigkeit wird sowohl die Oberfläche des Flachmaterials 13, die der Elektrodenhalterung 7 zugewandt ist und die die Verankerungsteile 15 der U-Formen der Stifte 11 aufweist, als auch die andere Oberfläche des Flachmaterials 13, die in Richtung auf die Schweißunterplatte 5 weist und aus der die Stifte 11 herausragen, blank und eben geschliffen.

Wie die einzige Figur zeigt, befindet sich auf der Schweißunterplatte 5 eine Folie 17, auf welcher wiederum ein Haken aufweisendes Haftband 19 angeordnet ist. Folie 17 und Haftband 19 bilden die zu verschweißenden Gegenstände. Bei dem Schweißvorgang selbst dringen die Stifte 11 der Hochfrequenz-Schweißelektrode 9 zwischen den Haken des Haftbandes 19 ein, ohne diese zu deformieren. Anstelle der hier dargestellten Haken des Haftbandes 19 können auch sonstige Verhakungselemente, z.B. in Schlingenform, vorliegen. Die Schweißfrequenz liegt üblicherweise im Bereich von in etwa 27 MHz.

Es hat sich des weiteren als vorteilhaft erwiesen, die Elektrodenhalterung 7 auf ihrer von den zu verschweißenden Gegenständen abgewandten Oberfläche mit einem Nadelvlies 21 zu versehen, welches mit einem Kunstharz getränkt wurde, das danach aushärtete. Mit dieser Maßnahme kann eine wirksame Schwingungsdämpfung während des Hochfrequenzschweißens bewirkt werden.

Zwischen die Schweißunterplatte 5 und die zu verschweißenden Gegenstände 17, 19 wird üblicherweise noch eine in etwa 0,5mm starke Platte 23 aus elektrischem Isolationsmaterial gelegt, um die Schweißunterplatte gegen Funkenüberschläge zu schützen, bei denen zu vermeidende kleine Krater im Bereich der Überschläge entstehen würden. Dieses Isolationsmaterial besteht aus einem Phenoplast-Schichtstoff mit Papier-Harzträger und ist allgemein unter der Markenbezeichnung "Pertinax" bekannt.

## Patentansprüche

1. Hochfrequenz-Schweißelektrode (9) aus zumindest einem textilen Flachmaterial (13) mit einer Vielzahl darin verankerter, elektrisch leitfähiger Stifte (11), die von der Oberfläche des Flachmaterials (13) in Richtung auf die zu verschweißenden Gegenstände (17, 19) hervorstehen.

2. Hochfrequenz-Schweißelektrode nach Anspruch 1, bei der die leitfähigen Stifte (11) eine U-förmige Ausbildung aufweisen, wobei die offenen Enden der U-Form jeweils die Stifte (13) bilden und wobei das entgegengesetzte geschlossene Ende der U-Form den Verankerungsteil (15) in dem Flachmaterial (13) dadurch bildet, daß es sich auf der von den zu verschweißenden Gegenständen (17, 19) abgewandten Oberfläche des Flachmaterials (13) befindet.

3. Hochfrequenz-Schweißelektrode nach Anspruch 1 oder 2, bei dem das textile Flachmaterial (13) aus natürlichem und/oder synthetischem textilem Material gebildet ist.

4. Hochfrequenz-Schweißelektrode nach Anspruch 3, bei dem das textile Flachmaterial (13) ein Stoffverbund aus Baumwolle und Kunstfaser, vorzugsweise hochtemperaturbeständiger Kunstfaser, besonders bevorzugt hochtemperaturbeständigem Polyamid ist.

5. Hochfrequenz-Schweißelektrode nach einem der Ansprüche 1 bis 4, bei dem der eine der zu verschweißenden Gegenstände ein Haftband (19) und der andere der zu verschweißenden Gegenstände eine Folie (17), vorzugsweise eine Kunststoffolie ist.
